# EUROPEAN PATENT APPLICATION

(11) **EP 2 386 963 A1**
(43) Date of publication of application: **16.11.2011**
(21) Application number: 10162390.8
(22) Date of filing: 10.05.2010
(51) Int. Cl.: G06F 17/30

(54) **Telecommunication chip card, mobile telephone device, and computer-readable storage medium**

(71) Applicant: Morpho Cards GmbH, 24220 Flintbek (DE)
(72) Inventor: Winter, Christian, 33378, Rheda-Wiedenbrück (DE)
(74) Representative: Richardt Patentanwälte

(57) **Abstract**

A telecommunications chip card (100) for enabling the login of a mobile telephone device (202) into a digital cellular mobile telecommunications network (200) comprising:
a chip card reader interface (102) adapted for allowing communications between the telecommunications chip card and the mobile telephone device;
a processor means (104);
a memory means (106) for storing programs for execution by the processor means; and
a program (108) stored in the memory means comprising machine readable instructions executable by the processor means; wherein execution of the program causes the processor means to perform the steps of:
- receiving (300, 402) usage messages (110, 228) via the chip card reader interface, the usage messages being descriptive of the use of the mobile telephone device,
- analyzing (302, 404) the usage messages to create a summary message (112,236),
- sending (303, 406) the summary message via the chip card reader interface to a remote computer system.
This allows the remote computer system to identify mobile telephone usage patterns which may be used to select tariff plans benefitial to the user or to send targeted sales or business offers to the user.

## Description

### TECHNICAL FIELD

The invention relates to telecommunications chip cards, in particular to telecommunications chip cards which enable the login of a mobile telephone device to a digital cellular mobile telecommunications network.

### BACKGROUND OF THE INVENTION

Mobile telephone devices are ubiquitous in today's society. Many individuals carry at least one mobile telephone device, typically a cellular telephone. Many other mobile telephone devices such as netbook computers or tablet computers are also commonly carried and used. While user may communicate using a mobile telephone using a variety of different modality. For instance a user may send an SMS, download a web page, send or receive email, and/or make a voice telephone call.

Tracking the usage patterns of a particular mobile telephone device may be beneficial to the operator of the digital cellular mobile telecommunications network, the user of the mobile telephone device, and also third parties. Usage patterns could, for example, be used to select tariff plans which are cost effective for the user. The operator and the third party may be able to use the usage patterns to send targeted sales or business offers to the user.

### SUMMARY OF THE INVENTION

There are several difficulties with tracking the usage patterns of a mobile telephone device.The operator of the digital cellular mobile telecommunication network could monitor all communications to mobile telephone devices that connect to the operator's network. However such a large database would require enormous computational power to perform the data mining for each mobile telephone device. There is also the disadvantage that such a database would be a tempting target for hackers or computer criminals.

If the data analysis were performed by a third party, neither the operator of the network nor the user of the mobile telephone device, it would require that enormous amounts of data about the use of the mobile telephone device be sent to the third party. This transmission of data could be intercepted and it could also be a drain on the network resources.

Embodiments of the invention may solve these and other problems by using a telecommunications chip card to create a summary message which summarizes the usage pattern of the mobile telephone device.

The telecommunications chip card is typically provided by the operator of the digital cellular mobile telecommunications network. The telecommunications chip card may have a process and a memory which may be used to store programs. The software for analyzing and summarizing may be stored in this memory and executed by the processor of the telecommunications chip card. This may provide the following advantages:
- The telecommunications chip card is typically provided by the operator of the network. The software on the telecommunications chip card may therefore be controlled and verified by the operators. This reduces the possibility that the data will be hijacked.
- Performing the analysis by the chip card reduces the need for data mining, because the analysis is performed by the telecommunications chip card instead of a central database.
- Less data needs to be transmitted. Instead of all data about the use of a mobile telephone device being transmitted a summary message is sent. This reduces the load on the network.
- It is easier for a user of a mobile telephone device to opt out. The telecommunications chip card receives usage messages from the mobile telephone device. If the consumer disables the mobile telephone device from sending usage message to the telecommunications chip card then no summary message can be created. With a central database, a consumer is less aware of what is happening with his or her data.

### Definitions

A 'telecommunications chip card' as used herein is a chip card which enables the login of a mobile telephone device into a digital cellular mobile telecommunications network. For example a telecommunications chip card may be a subscriber identity module (SIM) which securely stores a service-subscriber key which is used to identify the subscriber on the digital cellular mobile telecommunications network.

A 'computer-readable storage medium' as used herein is any storage medium which may store instructions which are executable by a processor of a computing device. The computer-readable storage medium may be a computer-readable non-transitory storage medium. The computer-readable storage medium may also be a tangible computer readable medium. In some embodiments, a computer-readable storage medium may also be able to store data which is able to be accessed by the processor of the computing device. An example of a computer-readable storage medium include, but are not limited to: a floppy disk, a magnetic hard disk drive, a solid state hard disk, flash memory, a USB thumb drive, Random Access Memory (RAM) memory, Read Only Memory (ROM) memory, an optical disk, a magneto-optical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example a data may be retrieved over a modem, over the internet, or over a local area network.

A 'memory' or 'memory means' as used herein is an example of a computer-readable storage medium. Memory is computer memory which is accessible to a processor. Examples of computer memory include, but are not limited to: RAM memory, register, and register files. When installed into a suitable reader other types of computer-readable storage medium may also be considered to be memory, examples include but are not limited to: a hard disk drive, a USB thumb drive, a floppy drive, a smart card, a DVD, a CD-ROM, and a solid state hard drive.

A 'processor' as used herein is an electronic component which is able to execute a program or machine executable instruction. References to the computing device comprising 'a processor' should be interpreted as possibly containing more than one processor. The term computing device should also be interpreted to possibly refer to a collection or network of computing devices each comprising a processor. Many programs have their instructions performed by multiple processors that may be within the same computing device or which may even distributed across multiple computing device.

A 'mobile telephone device' as used herein is a mobile communication device adapted for connecting to and providing access to a digital cellular mobile telecommunications network. Examples of a mobile telephone device include, but are not limited to: a mobile telephone, a personal digital assistant, a pager, a cellular modem for a computer, a netbook computer, a notebook computer, a tablet computer, and an electronic book or document reader.

A 'chip card reader interface' as used herein is an interface located on the telecommunications chip card which is adapted for connecting the telecommunications chip card to a chip card reader.

The invention provides for a telecommunications chip card, a mobile telephone device, and a computer-readable storage medium in the independent claims. Embodiments are given in the dependent claims.

In one aspect, the invention provides for a telecommunications chip card for enabling the login of a mobile telephone device into a digital cellular mobile telecommunications network. The telecommunications chip card comprises a chip card reader interface which is adapted for allowing communications between the telecommunications chip card and the mobile telephone device. The telecommunications chip card further comprises a processor means. The processor means may be a processor. The processor means may also comprise more than one processor. For example software code may be distributed among multiple processors or may even be distributed amongst multiple devices with processors.

The telecommunications chip card further comprises a memory means for storing programs for execution by the processor means. The memory means may be computer memory. The telecommunications chip card further comprises a program stored in the memory means comprising machine readable instructions executable by the processor means. The memory means may also comprise multiple memory locations. The multiple memory locations may be located within the same device. The memory means may also be spread apart on multiple devices. For instance memory in a mobile telephone device may be accessible to the processor via the chip card reader interface. Execution of the program causes the processor means to perform the step of receiving usage messages via the chip card reader interface. The usage messages are descriptive of the use of the mobile telephone device. The exact form of the usage message may depend upon the type of communications being used by the mobile telephone device. For example if an SMS is being sent the usage message may comprise the entire SMS message or a summary of the SMS message. A usage message may also indicate internet usage by the mobile telephone device. In this case the usage message may comprise Meta data about the internet usage such as the web address or material that is downloaded. The usage message may also contain information about a voice call. Information about the number called and the duration may be logged. In addition the usage message may also contain an audio or sections of audio from the telephone call.

Execution of the program further causes the processor means to analyze the usage messages to create a summary message. In this step the messages are analyzed and a summary comprising useful information is created. The usage messages in some embodiments may be stored in a file or database. For these embodiments the database or file may be analyzed using the program to create the summary message. Execution of the program further causes the processor means to send the summary message via the chip card reader interface. Creating a summary message and then sending the summary message via the chip card reader interface has a technical advantage. By analyzing usage messages and creating a summary message it is not necessary to send all of the information contained in the usage messages. The summary message may therefore contain less information and require fewer resources from the digital cellular mobile telecommunications network than if all of the usage messages were sent instead.

In another embodiment the usage messages comprise an SMS message. The step of analyzing the usage messages comprises extracting keywords from the SMS message. This embodiment is advantageous because extracting keywords from the SMS messages allows the creation of a summary message which requires less network resources to send than sending usage messages which comprise an entire SMS message.

In another embodiment the usage messages comprise an audio file with recorded speech. The step of analyzing the usage messages comprises creating a text file by performing voice recognition on the audio file. The voice recognition may be performed by a voice recognition software module and is well known in the art. The step of analyzing the usage message further comprises extracting keywords from the text file which was created during the voice recognition of the audio file. The summary message is at least partially created by adding the keywords to the summary message. This embodiment is advantageous because keywords are extracted from the recorded speech of the audio file. The extraction of keywords allows the creation of a summary message which contains information pertinent to what was discussed in a conversation using the mobile telephone device. This provides more security for a user than if the voice recognition were done in a central computing system or done by a computing device attached to the digital cellular mobile telecommunications network. Only the relevant keywords are extracted and the full text and/or the audio file are not transmitted when the summary message is sent via the chip card reader interface.

In another embodiment the usage messages comprise an internet data packet. The step of analyzing usage messages comprises adding Meta data descriptive of the data packet to the summary message. The Meta data may be such things as the site visited, the time the user spent looking at the web page or other internet data. The Meta data may also contain information of such this as things that are downloaded or in the case of voiceover IP Meta data may contain information about telephone calls made using the internet. This is advantageous because the summary message would then contain information about internet usage and other communication which may not be summarized by the operator of the mobile telecommunications network.

In another embodiment the step of analyzing the usage messages comprises any one of the following: adding a dialed number to the summary message, adding the date and/or time of the usage message to the summary message, and adding at least one keyword to the summary message. Adding a dialed number to the summary message is advantageous because then the summary message may be used to see how the mobile telephone device is being used for communicating and also may provide data which may be used for providing the owner of the mobile telephone device with advice on what tariff he or she should be using for the mobile telephone device. Adding the date and/or time to the summary message is also advantageous for the same reason. This may provide information about which tariff may be most cost effective for the owner of the mobile telephone device. In addition the date and/or time of the usage message may also be useful for scheduling the load on the digital cellular mobile telecommunications network. Finally adding at least one keyword to the summary message is beneficial because keywords require less space than full text and require fewer network resources when the summary message is sent via the chip card reader interface.

In another embodiment the method further comprises the step of receiving a list of predetermined keywords via the chip card reader interface. The summary message is created by searching for the predetermined keywords in the usage messages. This embodiment is advantageous because certain topics or subjects may be of interest and sending a list of predetermined keywords allows these topics or subjects to be searched for in the usage messages. For example the keywords may be products or names of bands or movies and if these are being discussed or text by the user of the mobile telephone device then the telecommunications chip card can find these predetermined keywords in the usage messages and report that these predetermined keywords were found. This can then be used to send targeted marketing or sales literature to the mobile telephone device by the operator of the digital cellular mobile telecommunications network or a third party.

In another embodiment the memory means contains a list of predetermined keywords. This is advantageous because the predetermined keywords are already stored in the memory means. The predetermined list of keywords may be preloaded or it may have been received or loaded dynamically over the digital cellular mobile telecommunications network.

In another embodiment the step of analyzing the usage messages comprises creating an index of keywords. The step of analyzing the usage messages further comprises adding the index of keywords to the summary message. This embodiment is particularly advantageous because instead of using a list of predetermined keywords an index of keywords is created. For instance the text may be parsed in a software module that can do natural language processing. Nouns, verbs, or phrases may be identified which indicates the topics or subjects which are being communicated using the mobile telephone device. The keywords may be sorted by frequency of use in the text. Essentially the keywords which appear most often in the text of usage messages may then be added to the summary message.

In another embodiment the telecommunications chip card is a subscriber identity module.

In another embodiment the telecommunications chip card is a mini-subscriber identity module.

In another embodiment the telecommunications chip card is a micro-subscriber identity module.

In another embodiment the telecommunications chip card is a universal subscriber identity module.

In another embodiment the telecommunications chip card is a CDMA subscriber identity module.

In another embodiment the telecommunications chip card is a Wilcom subscriber identity module.

In another aspect the invention provides for a mobile telephone device. The mobile telephone device comprises a telecommunications chip card according to an embodiment of the invention. The mobile telephone device further comprises a telecommunications chip card reader adapted for connecting to the chip card reader interface of the telecommunications chip card. The telecommunications chip card reader provides an interface between the mobile telephone device and the telecommunications chip card.

The mobile telephone device further comprises a chip card communication means for sending the usage messages to the telecommunications chip card via the telecommunications chip card reader. In some embodiments the chip card communications means may comprise a processor means and software. In this embodiment the telecommunications chip card reader is connected to the processor. The mobile telephone device further comprises a network communications means for sending the summary message to a remote computer via the digital cellular mobile telecommunications network. In some embodiments the network communications means may be a transceiver. In this embodiment the transceiver is adapted for connecting to the digital cellular mobile telecommunications network. In some embodiments the mobile telephone device may comprise a processor means as and a memory means. There may be a program stored in the memory means of the mobile telephone device which contains software which causes the mobile telephone device to send the usage messages to the telecommunications chip card. This software may also contain code which constructs the usage messages.

In another aspect the invention provides for a computer-readable storage medium. The computer-readable storage medium carries machine executable instructions which when executed by a processor means causes the processors means to perform the step of receiving usage messages via the chip card reader interface of a telecommunications chip card for enabling login of the mobile telephone device into a digital cellular mobile telecommunications network.

The usage messages are descriptive of the use of the mobile telephone device. The instructions further cause the processor means to perform the step of analyzing the usage messages to create a summary message. The instructions further cause the processor to perform the step of sending the summary message via the chip card reader interface. The advantages of performing these steps have been previously discussed. It is understood that a processor means may be one or multiple processors as a computer-readable storage medium may also be a single physical medium or it may be multiple physical mediums. The storage medium and the processor means may be located in a single device or component or may be distributed amongst multiple devices. For instance there may be a processor located in the telecommunications chip card and in a mobile telephone device. Each of these two separate components may execute a portion of the machine executable instructions.

In another embodiment the computer-readable storage medium further comprises a mobile telephone software module. The mobile telephone software module is located within a computer-readable storage medium of the mobile telephone device, The mobile telephone software module comprises instructions which when executed by the processor means cause the mobile telephone device to perform the step of sending usage messages via the chip card reader interface to the telecommunications chip card. The mobile telephone software module further comprises instructions which cause the mobile telephone device to perform the step of receiving the summary message via the chip card reader interface. The mobile telephone software module further comprises instructions which cause the processor means of the mobile telephone device to send the summary message via the digital cellular mobile telecommunications network to a remote computer system. In some embodiments the mobile telephone software module may also comprise instructions which cause the processor means to construct the usage messages.

In another embodiment the computer-readable storage medium further comprises a remote computer system software module. The remote computer system software module comprises instructions which when executed by the processor means cause a remote computer system to perform the step of receiving the summary message via the digital cellular mobile telecommunications network. The remote computer system software module further comprises instructions which cause the processor means to perform the step of selecting a response message from a database of predetermined messages depending upon the summary message.

The remote computer system software module further comprises instructions which cause the processor means to send the response message to the mobile telephone device via the digital cellular mobile telecommunications network. In this embodiment the remote computer system first receives the summary message. Then the summary message is used to select a response message from a database. The database may be a database, a file, or a collection of files. The database may be a relational database, but the use of the term database is not limited to a relational database. The response message is selected using the summary message, for instance if the summary message comprises keywords the keywords may be used to search through a variety of response messages. The response message or response messages which have the highest search score may be then sent to the mobile telephone device.

In other embodiments the summary message may comprise usage information about the telephone. For instance it may include numbers dialed, duration of call, and times. In this case the response message may be selected by choosing a tariff which is the most economical for the owner of the mobile telephone device to use. This embodiment is particularly advantageous because targeted information may be provided or sent to the mobile telephone device. The remote computer system may be a computer system or a component of the digital cellular mobile telecommunications network. The remote computer system may also be a third party. For example information to a third party with a server connected to the internet may receive the summary messages by a gateway between the internet and the digital cellular mobile telecommunications network.

### BRIEF DESCRIPTION OF THE DRAWINGS

In the following preferred embodiments of the invention will be described, by way of example only, and with reference to the drawings in which:
Fig.1 shows a telecommunications chip card according to an embodiment of the invention;
Fig.2 shows an example of a digital cellular mobile telecommunications network according to an embodiment of the invention;
Fig. 3 shows steps in a block diagram which are performed by the processor means when the program stored in the computer-readable storage medium is executed; and
Fig. 4 shows a block diagram of steps performed by the processor means when the instructions stored on the computer-readable storage medium are executed.

### DETAILED DESCRIPTION OF THE EMBODIMENTS

Like numbered elements in these figures are either equivalent elements or perform the same function. Elements which have been discussed previously will not necessarily be discussed in later figures if the function is equivalent.

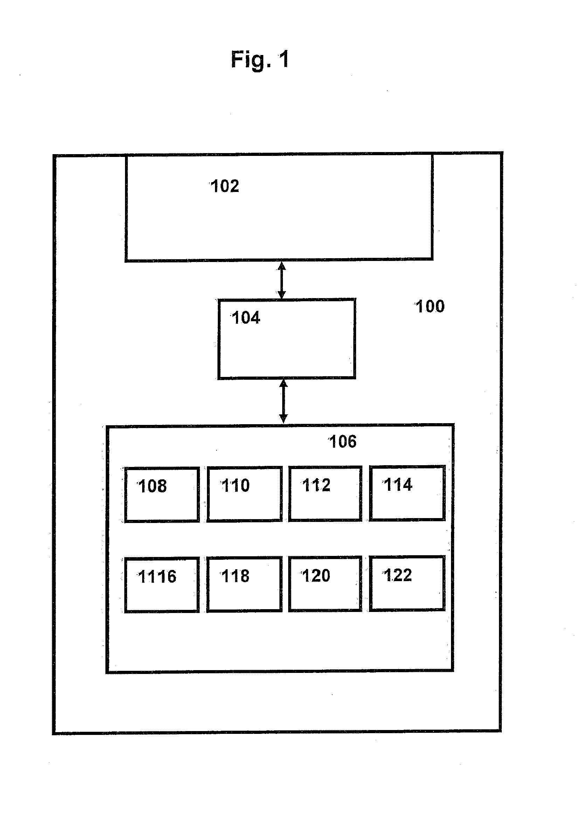

Fig. 1 shows an embodiment of a telecommunications chip card 100 according to the invention. The telecommunications chip card 100 has a telecommunications chip card reader interface 102. The telecommunications chip card reader interface 102 is connected to a processor 104. The processor 104 is connected to memory 106. The memory 106 is adapted for storing data and programs or computer executable instructions which are accessible to the processor 104.

Within the memory 106 is shown a program 108 which contains machine executable instructions for performing the steps of receiving the usage messages, analyzing the usage messages and sending the summary message via the chip card reader interface. The memory 106 further has usage messages 110 stored within it. The usage messages 110 may be stored in a database, a file, a single file, or in a folder within the memory 106. The memory 106 further contains a summary message 112 which is constructed by the program 108 upon analyzing the usage messages 110. The memory 106 is further shown as containing keywords 114. The keywords 114 may be predetermined keywords 114 or they may be keywords that were determined using a keyword determination module 116. The keyword determination module 116 takes keywords which are found within the usage messages 110 and either constructs or appends the keywords file 114.

The memory 106 further contains an analysis module 118. The analysis module 118 can be different depending upon what is in or what comprises the usage messages. For instance the analysis module 118 may extract Meta data about an internet packet or a summary of an internet connection. The analysis module 118 may also be used to analyze text. The memory 106 further comprises a voice recognition module 120. The voice recognition module 120 may perform voice recognition on a text file which is then subsequently analyzed using a natural language processing module 122. The natural language processing module 122 may also be used to analyze the text of SMS messages, emails, or information within an internet data packet.

The searching for keywords within the text or transcript of the usage messages may be performed in a variety of ways. The usage messages could be analyzed at predetermined time intervals and the resulting summary message could also then be sent at predetermined time intervals. Alternatively usage messages could be analyzed on-the-fly. In other words, individual usage messages are analyzed as they are received.

**Table 1:**

| Keyword | Total hits occurrence/counter | Remaining hits till next notification | Threshold for notification |
|---|---|---|---|
| IBM | 2 | 3 | 5 |
| Starbucks | 10 | 2 | 4 |
| Ikea | 23 | 2 | 4 |

Table 1 illustrates one possible implementation of an on-the-fly analysis of usage messages . Table 1 may be representative of an array stored in the memory of the telecommunications chip card. There is a list of predetermined keywords (Keyword column) in table 1. In this example a summary message is sent whenever a particular keyword is detected or found a predetermined number of times. The detection of finding of a keyword in a usage message is referred to as a 'hit.' In table 1, this is the threshold for notification. In this example every 5 times the usage messages contain IBM, a summary message is sent.

There is also a column (remaining hits till next notification) which stores the number of times a keyword has been found or detected since a summary message was last sent referencing a particular keyword. When the remaining hits till next notification is greater than or equal to the threshold for notification a usage message is sent. The usage message may be in the form of an SMS, email, or data packet which is sent to a predetermined destination address. The destination address could be a telephone number, an email address, a web address, or a network location. The destination address could be stored in the table or memory of the telecommunications chip card. The content of the usage message or usage message could also be stored in a table or in the memory of the telecommunications chip card.

The keywords in table 1could, in some embodiments, be updated remotely or on demand from outside so that telecommunications chip card may be customized or optimized for a particular user.

In addition the total number of hits or occurrences of a keyword is also recorded. The telecommunications chip card could be queried as to the total number of times a keyword has been used. Alternatively a summary message which summaries the total number of times a keyword or a group of keywords has been found may be sent. For instance summary messages could be sent at time intervals which contain the total number of times a particular keyword, a group of the keywords, or all of the keywords have been detected or found in the usage messages.

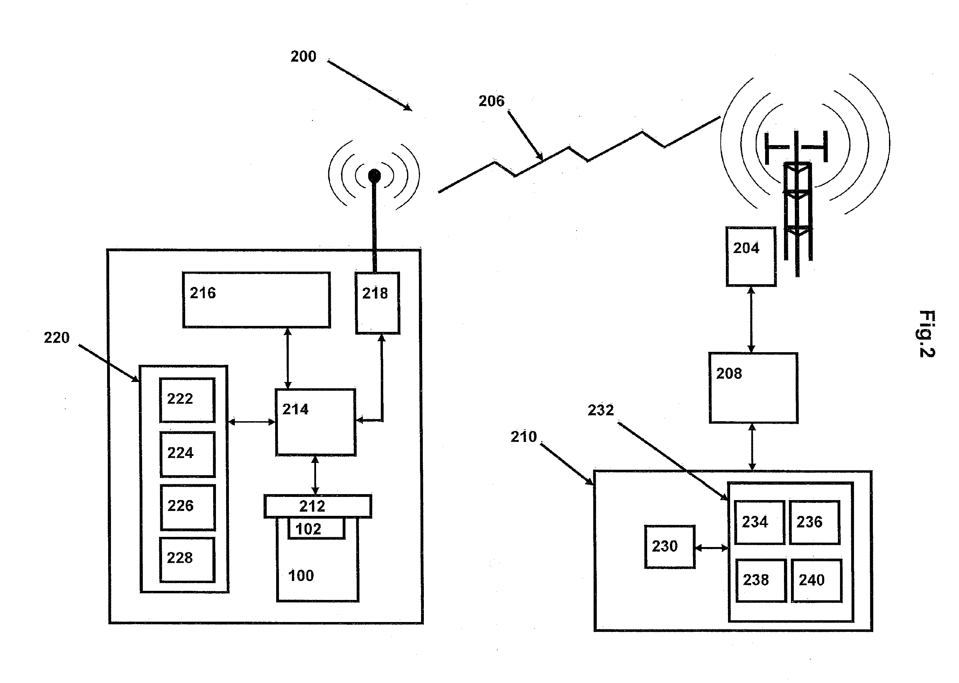

Fig. 2 shows an example of a digital cellular mobile telecommunications network 200 according to an embodiment of the invention. The digital cellular mobile telecommunications network 200 consists of a mobile telephone device 200 connected to a base station 204 via a radio communications link 206. The base station 204 is connected to a radio network controller 208. The radio network controller 208 is further connected to a remote computer system 210. The remote computer system may be on the same network as the radio network controller 208 or the remote computer system 210 may be part of another network which is connected to the radio network controller 208 through a gateway. For instance the remote computer system 210 may be on the internet and may connect to the radio network controller 208 through an internet gateway.

The mobile telephone device 202 comprises a telecommunications chip card reader 212 which is connected to a telecommunications chip card 100 which has a telecommunications chip card reader interface 102. The telecommunications chip card reader 212 is connected to a processor 214. The processor 214 is connected to a user interface 216. The user interface 216 may comprise different components depending upon the type of mobile telephone device. For instance the user interface 216 may comprise an audio interface. This may include a microphone and a speaker with the appropriate analogue to digital and digital to analogue converters. The user interface 216 may also comprise a display for displaying information to a user. The user interface 216 may also comprise an input device for a user. For instance the user interface may comprise a touch screen and/or keypad. The processor 214 is also connected to a transceiver 218 which is used to establish the radio communications link 206 with the base station 204. The transceiver 218 may be considered to be a network communications means.

Processor 214 is further connected to a memory 220. The memory 220 stores data and instructions which are accessible by the processor 214. Shown within the memory 220 is a mobile telephone software module 222. The mobile telephone software module 222 performs instructions which cause the processor 214 to perform the steps of sending usage messages to the telecommunications chip card, receiving the summary message from the chip card reader interface, and sending the summary message via the digital cellular mobile telecommunications network to the remote computer system 210.

The memory 220 may also in some embodiments comprise a communications monitoring module 224. The communications monitoring module 224 monitors usage of the mobile telephone device 202 and is used to create usage messages 228. The communications monitoring module 224 may in some embodiments work in conjunction with a communications analysis module 226. In some embodiments complete SMS messages, voice data and/or internet packet data may be transmitted by the processor 214 directly to the telecommunications chip card 100 for analysis. In other embodiments the communications analysis module 226 may completely or partially analyze communications data generated by the mobile telephone device 202. For instance voice recognition may be performed by the communications analysis module 226 instead of the voice recognition module 120 that was shown in Fig. 1. In some embodiments the communications analysis module 226 may also analyze or partially analyze text which is used to construct the usage messages 228.

The remote computer system 210 comprises a processor 230. The processor 230 is connected to a memory 232. The memory 232 is adapted for storing data and machine executable instructions accessible to the processor 230. The memory 232 is shown as containing a remote computer system software module 234. The remote computer system software module 234 comprises machine executable instructions which cause the processor to perform the steps of receiving the summary message via the digital cellular mobile telecommunications network, selecting a response message from a database of predetermined messages depending upon the summary message, and sending the response message to the mobile telephone device via the digital cellular mobile telecommunications network.

The memory 232 is also shown as containing a summary message 236 which has been received from the mobile telephone device 202 via the radio communication link 206. The memory 232 is further shown as comprising a database 238. The remote computer system software module 234 is able to use the summary message 236 for selecting a response message 240 from the database 238. After a response message 240 is selected the remote computer system 210 sends the response message 240 to the mobile telephone device 202 via the radio communications link 206.

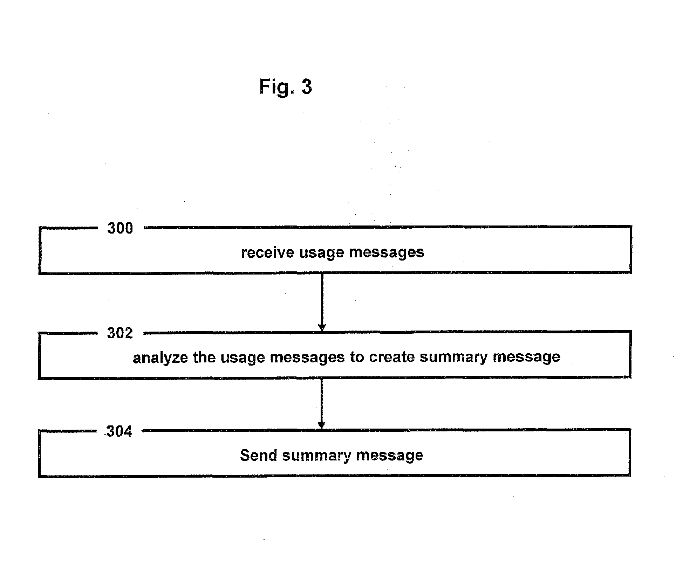

Fig. 3 shows steps in a block diagram which are performed by the processor means when the program stored in the memory means is executed. The block diagram shown in Fig. 3 is also a method. In step 300 usage messages are received. In step 302 the usage messages are analyzed to create a summary message. In step 304 the summary message is then sent. The summary message is sent by the telecommunications chip card 100 to the mobile telephone device 202.

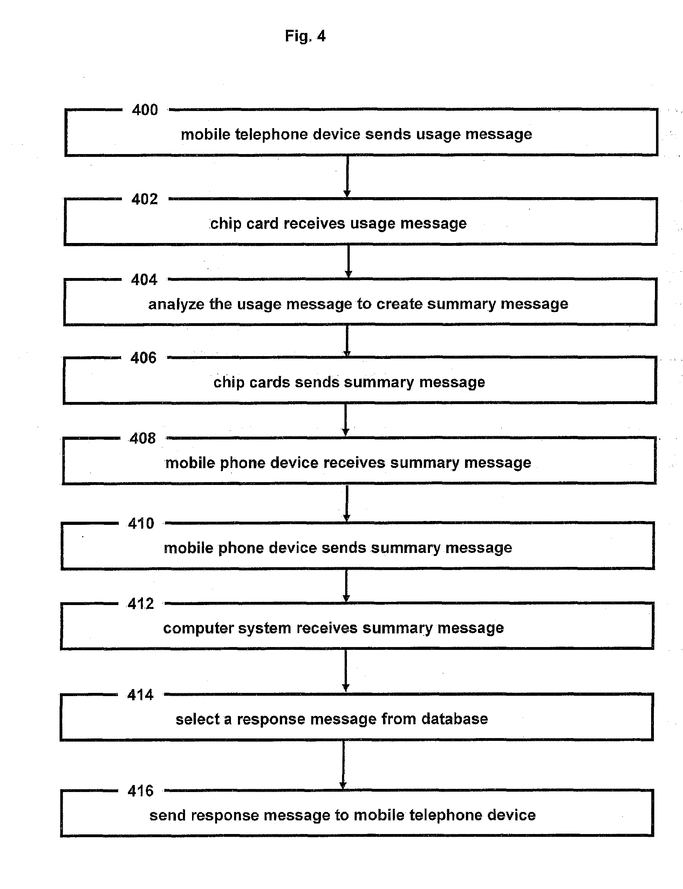

Fig. 4 shows a block diagram of steps performed by the processor means when the instructions stored on the computer-readable storage medium are executed. The steps in Fig. 4 also constitute a method. In step 400 the mobile telephone device sends usage messages to the telecommunications chip card. In step 402 the telecommunications chip card receives the usage messages. In step 404 the usage messages are analyzed to create a summary message. In step 406 the telecommunications chip card sends the summary message to the mobile telephone device. In step 408 the mobile telephone device receives the summary message. In step 410 the mobile telephone device sends the summary message to the remote computer system. In step 412 the remote computer system receives the summary message. In step 414 the remote computer system selects a response message from the database using the summary message. In step 416 the remote computer system sends the response message to the mobile telephone device 416.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### List of reference numerals

- 100: telecommunications chip card
- 102: telecommunication chip card reader interface
- 104: processor
- 106: memory
- 108: program
- 110: usage messages
- 112: summary message
- 114: keywords
- 116: keyword determination module
- 118: analysis module
- 120: voice recognition module
- 122: natural language processing module
- 200: digital cellular mobile telecommunications network
- 202: mobile telephone device
- 204: base station
- 206: radio communications link
- 208: radio network controller
- 210: remote computer system
- 212: telecommunications chip card reader
- 214: processor
- 216: user interface
- 218: transceiver
- 220: memory
- 222: mobile telephone software module
- 224: communications monitoring module
- 226: communications analysis module
- 228: usage messages
- 230: processor
- 232: memory
- 234: remote computer system software module
- 236: summary message
- 238: database
- 240: response message

## Claims

1. A telecommunications chip card (100) for enabling the login of a mobile telephone device (202) into a digital cellular mobile telecommunications network (200) comprising:
a chip card reader interface (102) adapted for allowing communications between the telecommunications chip card and the mobile telephone device;
a processor means (104);
a memory means (106) for storing programs for execution by the processor means; and
a program (108) stored in the memory means comprising machine readable instructions executable by the processor means; wherein execution of the program causes the processor means to perform the steps of:
- receiving (300, 402) usage messages (110, 228) via the chip card reader interface, the usage messages being descriptive of the use of the mobile telephone device,
- analyzing (302, 404) the usage messages to create a summary message (112,236),
- sending (303, 406) the summary message via the chip card reader interface.

2. The telecommunications chip card of claim 1, wherein the usage messages comprise an SMS message, and wherein the step of analyzing the usage messages comprises extracting keywords from the SMS message.

3. The telecommunications chip card of claim 1 or 2, wherein the usage messages comprise an audio file with recorded speech, wherein the step of analyzing the usage messages comprises creating a text file by performing voice recognition on the audio file, wherein the step of analyzing the usage messages further comprises extracting keywords from the text file, and wherein the summary message is at least partially created by adding the keywords to the summary message.

4. The telecommunications chip card of claim 1, 2, or 3, wherein the usage messages comprise an internet data packet, wherein the step of analyzing the usage messages comprises adding metadata descriptive of the data packet to the summary message.

5. The telecommunications chip card of claim of any one of the preceding claims, wherein the step of analyzing the usage messages comprises any one of the following: adding a dialed number to the summary message, adding the date and/or time of the usage message to the summary message, and adding at least a keyword to the summary message.

6. The telecommunications chip card of any one of the preceding claims, wherein the method further comprises the step of receiving a list of predetermined keywords via the chip card reader interface, and wherein the summary message is created by searching for the predetermined keywords in the usage messages.

7. The telecommunications chip card of claim 6, wherein the memory means contains the list of predetermined keywords.

8. The telecommunications chip card of any one of the preceding claims, wherein the step of analyzing the usage messages comprises creating an index of keywords, and wherein the step of analyzing the usage messages further comprises adding the index of keywords to the summary message.

9. The telecommunications chip card of claim of any one of the preceding claims, wherein the telecommunications chip card is any one of the following: a subscriber identity module, a mini subscriber identity module, a micro subscriber identity module, a universal subscriber identity module, a CDMA subscriber identity module, and a Willcom subscriber identity module.

10. A mobile telephone device comprising:
- a telecommunications chip card (100) according to any one of the preceding claims;
- a telecommunications chip card reader (212) adapted for connecting to the chip card reader interface (102) of the telecommunications chip card;
- a chip card communications means (214) for sending usage messages (110, 228) to the telecommunications chip card via the telecommunications chip card reader; and
- a network communications means (218) for sending the summary message to a remote computer (210) via a digital cellular mobile telecommunications network (206).

11. A computer-readable storage medium carrying machine executable instructions which, when executed by a processor means causes the processor means to perform the steps of:
- receiving (300, 402) usage messages via the chip card reader interface of a telecommunication chip card for enabling the login of a mobile telephone device (202) into a digital cellular mobile telecommunications network (200), the usage messages being descriptive of the use of the mobile telephone device;
- analyzing (302, 404) the usage messages to create a summary message (112, 236); and
- sending (304, 406) the summary message via the chip card reader interface.

12. The computer-readable storage medium of claim 11, wherein the computer-readable storage medium further comprises a mobile telephone software module (222), wherein the mobile telephone software module comprises instructions which when executed by the processor means cause the mobile telephone device to perform the steps of:
- sending (400) usage messages via the chip card reader interface to the telecommunications chip card;
- receiving (408) the summary message via the chip card reader interface; and
- sending (410) the summary message via the digital cellular mobile telecommunications network to a remote computer system (210).

13. The computer-readable storage medium of claim 12, wherein the computer-readable storage medium further comprises a remote computer system software module (234), wherein the remote computer system software module comprises instructions which when executed by the processor means cause the remote computer system to perform the steps of:
- receiving (412) the summary message via the digital cellular mobile telecommunications network,
- selecting (414) a response message (240) from a database (238) of predetermined messages depending upon the summary message; and
- sending (416) the response message to the mobile telephone device via the digital cellular mobile telecommunications network.
